(19) Europäisches Patentamt
European Patent Office
Office européen des brevets

(11) Veröffentlichungsnummer : **0 170 851**
**B1**

# (12) EUROPÄISCHE PATENTSCHRIFT

(45) Veröffentlichungstag der Patentschrift : **09.09.87**

(51) Int. Cl.⁴ : **C 08 K 5/42**, C 08 L 69/00

(21) Anmeldenummer : **85107791.7**

(22) Anmeldetag : **24.06.85**

(54) **Perfluroalkansulfonsäurearylester als Antitropfmittel in flammwidrigen Formmassen auf Basis thermoplastischer, aromatischer Polycarbonate.**

(30) Priorität : **07.07.84 DE 3425122**

(43) Veröffentlichungstag der Anmeldung : **12.02.86 Patentblatt 86/07**

(45) Bekanntmachung des Hinweises auf die Patenterteilung : **09.09.87 Patentblatt 87/37**

(84) Benannte Vertragsstaaten : **DE FR GB IT NL**

(56) Entgegenhaltungen : **DE-A- 3 103 141**

(73) Patentinhaber : **BAYER AG**
**Konzernverwaltung RP Patentabteilung**
**D-5090 Leverkusen 1 Bayerwerk (DE)**

(72) Erfinder : **Kress, Hans-Jürgen, Dr.**
**Scheiblerstrasse 111**
**D-4150 Krefeld 1 (DE)**
Erfinder : **Kircher, Klaus, Dr.**
**Alfred-Kubin-Strasse 3**
**D-5090 Leverkusen 1 (DE)**
Erfinder : **Bottenbruch, Ludwig, Dr.**
**Wöhlerstrasse 5**
**D-4150 Krefeld 1 (DE)**
Erfinder : **Koemm, Ulrich, Dr.**
**Haferkamp 3**
**D-5000 Koeln 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 170 851 B1

Jouve, 18, rue St-Denis, 75001 Paris, France

**Beschreibung**

Gegenstand der vorliegenden Erfindung ist die Verwendung von Perfluoralkansulfonsäurearylestern der Formel (I)

$$(R_FSO_2O)_xAr \qquad (I)$$

worin

$R_F$ ein geradkettiger oder verzweigter, aliphatischer Perfluorligand mit 1 bis 20, vorzugsweise mit 4 bis 12 C-Atomen, der außer Fluoratomen höchstens ein Wasserstoffatom und/oder auf je zwei C-Atome des Liganden ein sonstiges Halogenatom enthält, und dessen C-Kette von Sauerstoffatomen unterbrochen sein kann,

x eine ganze Zahl von 1 bis 20, vorzugsweise von 1 bis 6, und

Ar ein substituierter oder unsubstituierter, carbocyclischer oder heterocyclischer, aromatischer Rest ist, der aus einem Ring oder annellierten Ringen oder verbrückten Ringen bestehen kann, als Antitropfmittel in flammwidrigen Formmassen auf Basis thermoplastischer, aromatischer Polycarbonate.

Beispiele für Ar sind Phenyl, alkyliertes Phenyl, halogeniertes Phenyl, Biphenyl, Phenylmethylphenyl, Phenylisopropylphenyl und Naphthyl.

Beispiele für $R_F$ sind $C_4F_9$-, $C_8F_{17}$-, sowie Perfluoralkylreste mit 1-12 C-Atomen, sowie Reste der Form $-(CF_2)_nH$ mit n = 1-12 und $-(CF_2-CFCl)_mF$, $-(CF_2-CFCl)_mH$ bzw. $-(CF_2-CF_2-O)_mH$ mit m = 1-6.

Bevorzugte Reste Ar sind Phenyl, Biphenyl und Phenylisopropylphenyl. Bevorzugte Reste $R_F$ sind Perfluorbutan- bzw. Perfluoroctanreste.

Die Mengen an Sulfonsäurearylester betragen zwischen 0,2 und 2 Gew.-%, vorzugsweise zwischen 0,2 und 1 Gew.-%, bezogen auf thermoplastischen Polycarbonat, an Sulfonsäurearylestern der Formel (I).

Flammwidrig ausgerüstete Polycarbonatformmassen sind bekannt. Eine ausgezeichnete Methode Polycarbonate flammwidrig auszurüsten, besteht bekanntlich in dem Zusatz von Alkalimetall- oder Erdalkalimetallsulfonaten von aliphatischen oder aromatischen Sulfonsäuren, welche gegebenenfalls durch Fluor, Chlor oder auch Brom substituiert sein können (sie he beispielsweise DE-OS 1 930 257).

Es ist außerdem bekannt, das Abtropfverhalten flammwidrig ausgerüsteter Polycarbonatformmassen durch den Zusatz spezieller Substanzen zu verringern (siehe DE-OS 2 148 598, DE-OS 2 535 261, DE-OS 2 535 262 und DE-OS 2 535 263), wobei entweder Polysiloxane oder fluorierte Polyolefine oder Glasfasern zugesetzt werden (siehe auch DE-OS 2 918 882, DE-OS 2 918 883 oder DE-OS 2 903 100).

Nachteilig bei diesen Systemen ist beispielsweise einerseits die mangelnde Transparenz bei Einsatz von Polysiloxanen sowie gegebenenfalls auftretende Probleme bei der Verarbeitbarkeit, wie beispielsweise Oberflächenstörungen bei Einsatz des fluorierten Polyolefins oder Abbau der Polymermatrix bei Verwendung von Glasfasern.

Demgegenüber war es überraschend, daß niedermolekulare Sulfonsäureester die Funktion dieser hochmolekularen und/oder faserigen Additive übernehmen können.

Ein Vorteil der niedermolekularen Antitropfmittel besteht in der leichteren Ein- und Verarbeitbarkeit in die beziehungsweise der Polycarbonatformmassen, wobei die erfindungsgemäß einzusetzenden Sulfonsäureester bei den Polycarbonatverarbeitungsbedingungen stabil und kaum flüchtig sind. Ein besonderer Vorteil der erfindungsgemäß zu verwendenden Sulfonsäureester besteht darin, daß sie die Transparenz von thermoplastischen Polycarbonaten nicht mindern.

Gegenstand der vorliegenden Erfindung sind Formmassen auf Basis von thermoplastischen, aromatischen Polycarbonaten mit einem Gehalt an Flammschutzmittel und mit einem Gehalt an Antritropfmittel, dadurch gekennzeichnet, daß sie als Antitropfmittel Perfluoralkansulfonsäureester der Formel (I) in Mengen von 0,2 bis 2 Gew.-%, vorzugsweise von 0,2 bis 1 Gew.-%, bezogen auf thermoplastisches Polycarbonat, enthalten.

Die thermoplastischen, aromatischen Polycarbonate sollen die Flammschutzmittel in Mengen von 0,02 bis 2 Gew.-% und insbesondere von 0,05 bis 1 Gew.-%, bezogen auf thermoplastische Polycarbonat, enthalten.

Bevorzugte Flammschutzmittel sind Alkali- oder Erdalkalisalze von aliphatischen oder aromatischen Sulfonsäuren.

Besonders bevorzugte Formmassen sind flammwidrig und transparent, d. h. die als Flammschutzmittel eingesetzen Sulfonsäuresalze sind im thermoplastischen Polycarbonat löslich und/oder haben einen mit dem thermoplastischen Polycarbonat übereinstimmenden Brechungsindex (siehe V. Mark, Conference Paper, « Chemistry and Chemical Enginering », San Francisko, USA, August 1980 und beispielsweise DE-OS 2 903 100).

Ein weiterer Gegenstand der vorliegenden Erfindung ist ein Verfahren zur Herstellung von Formmassen auf Basis von thermoplastischen aromatischen Polycarbonaten mit einem Gehalt an Flammschutzmitteln und mit einem Gehalt an Antritropfmitteln, dadurch gekennzeichnet, daß man das Flammschutzmittel in Mengen von 0,02 bis 2 Gew.-%, bezogen auf thermoplastisches Polycarbonat, zugleich oder sukzessive mit dem Antritropfmittel der Formel (I) in Mengen von 0,2 Gew.-% bis 2 Gew.-%, bezogen auf thermoplastisches Polycarbonat, in das thermoplastische Polycarbonat bei einer Temperatur

von 280 °C bis 310 °C, vorzugsweise bei 290 °C bis 300 °C über einen Doppelwellenextruder mit einer Drehzahl von 80 bis 100 Umdrehungen pro Minute und einem Durchsatz von 5 kg/h einarbeitet.

Thermoplastische, aromatische Polycarbonate im Sinne der Erfindung sind Homopolycarbonate auf Basis von 2,2-Bis-(4-hydroxyphenyl)-propan (Bisphenol-A), Copolycarbonate aus Bisphenol-A mit bis zu 20 Gew.-%, bezogen auf Copolycarbonat, an anderen Diphenolen oder Mischungen aus Bisphenol-A-homopolycarbonaten mit Copolycarbonaten aus Bisphenol-A mit anderen Diphenolen, wobei wiederum bis zu 20 Gew.-%, bezogen jedoch auf Polycarbonatmischung, an anderen Diphenolen im eingesetzten Copolycarbonat copolykondensiert sind.

Für die Herstellung der Copolycarbonate geeignete andere Diphenole sind beispielsweise 4,4'-Dihydroxydiphenyl, α,α'-Bis-(4-hydroxyphenyl)-p-isopropylbenzol, Hydrochinon, Bis-(Hydroxyphenyl)-sulfide, Bis-(Hydroxyphenyl)-ether, Bis-(Hydroxyphenyl)-ketone, Bis-(Hydroxyphenyl)-sulfoxide, Bis-(Hydroxyphenyl)-sulfone, 2,2-Bis-(3,5-dichlor-4-hydroxyphenyl)-propan und 2,2-Bis-(3,5-dibrom-4-hydroxyphenyl)-propan.

Diese und weitere geeignete andere Diphenole sind literaturbekannt (siehe beispielsweise US-Patent 3 028 365 und Schnell, « Chemistry and Physics of Polycarbonates », Interscience Publishers, New York 1964).

Bevorzugt einsetzbare thermoplastische Polycarbonate sind die Bisphenol-A-Homopolycarbonate und die erwähnten Copolycarbonate mit bis zu 5 Gew.-%, bezogen auf Copolycarbonat, an anderen copolykondensierten Diphenolen.

Die thermoplastischen, aromatischen Polycarbonate können nach den literaturbekannten Verfahren hergestellt werden, beispielsweise nach dem Phasengrenzflächenverfahren oder nach dem Schmelzumesterungsverfahren.

Die Molekulargewichte der thermoplastischen, aromatischen Polycarbonate $\bar{M}w$ (Gewichtsmittelmolekulargewicht) sollen zwischen 10 000 und 200 000 liegen, vorzugsweise zwischen 20 000 und 80 000 (gemessen beispielsweise nach der Lichtzerstreuungsmethode oder ermittelt über die relative Viskosität in $CH_2Cl_2$ bei 20 °C und einer Konzentration von 0,5 in 100 ml $CH_2Cl_2$).

Bevorzugte Polycarbonate sind solche mit relativen Viskositäten von 1,26 bis 1,35.

Die thermoplastischen aromatischen Polycarbonate können in bekannter Weise durch den Einbau geringer Mengen, vorzugsweise von Mengen zwischen 0,05 und 2,0 Mol.-%, bezogen auf eingesetzte Diphenole, an drei- oder mehr als dreifunktionellen Verbindungen, insbesondere solchen mit drei oder mehr als drei phenolischen Hydroxygruppen, verzweigt sein.

Polycarbonate dieser Art sind z. B. in den deutschen Offenlegungsschriften 1 570 533, 1 595 762, der britischen Patentschrift 1 079 821, der US-Patentschrift Re 27 682 und in dem deutschen Patent 2 500 092 beschrieben.

Einige der verwendbaren Verbindungen mit drei oder mehr als drei phenolischen Hydroxygruppen sind beispielsweise 2,4-Bis-(hydroxy-phenyl-isopropyl)-phenol, 2,6-Bis-(2'-hydroxy-5'-methyl-benzyl)-4-methylphenol, 2-(4-Hydroxyphenyl)-2-(2,4-dihydroxyphenyl)-propan und 1,4-Bis-(4,4''-dihydroxytriphenylmethyl)-benzol.

Einige der sonstigen dreifunktionellen Verbindungen sind 2,4-Dihydroxybenzoesäure, Trimesinsäure, Cyanurchlorid und 3,3-Bis(4-hydroxy-3-methylphenyl)-2-oxo-2,3-dihydroindol (Isatin-bis-Kresol).

Besonders bevorzugt einsetzbare thermoplastische Polycarbonate sind verzweigte Bisphenol-A-Homopolycarbonate und verzweigte Copolycarbonate von Bisphenol-A mit bis zu 5 Gew.-%, bezogen auf Copolycarbonat, an anderen copolykondensierten Diphenolen.

Flammschutzmittel für thermoplastische Polycarbonate sind beispielsweise Alkali- bzw. Erdalkalisalze von organischen oder anorganischen Säuren, wie beispielsweise in den deutschen Offenlegungsschriften Nr. 2 703 710, Nr. 2 918 882, Nr. 2 918 883, Nr. 2 461 077 und Nr. 2 461 146 beschrieben.

Beispielhaft seien hier genannt :

Trinatrium- oder Trikalium-hexafluoroaluminat, -hexafluortitanat, -hexafluorosilikat, Natrium- oder Kaliumtetrafluoroborat, Natrium- oder Kaliumpyrophosphat, Natriumbenzolsulfonat, Magnesiumbenzolsulfonat, Dinatriumnaphtalin-2,6-disulfonat, Kalium- oder Natrium-2,4,5-trichlorbenzolsulfonat, Kalium- oder Natrium-2,5-dichlorbenzolsulfonat, Kaliumperfluorbutansulfonat, Alkalisalze der Diphenylsulfon-3-sulfon- bzw. der Diphenylsulfon-3,3'-disulfonsäure.

Bevorzugte Flammschutzmittel für thermoplastische Polycarbonate sind Alkali- oder Erdalkalisalze von aliphatischen oder aromatischen Sulfonsäuren, welche gegebenenfalls durch Fluor, Chlor oder Brom substituiert sein können.

Beispielhaft seien hier genannt :

Natriumbenzolsulfonat, Magnesiumbenzolsulfonat, Dinatriumnaphtalin-2,6-disulfonat, Kalium- oder Natrium-2,4,5-trichlorbenzolsulfonat, Kalium- oder Natrium-2,5-dichlorbenzolsulfonat, Kaliumperfluorbutansulfonat, Alkalisalze der Diphenylsulfon-3-sulfon- bzw. der Diphenylsulfon-3,3'-disulfonsäure.

Besonders bevorzugte Flammschutzmittel, die im Polycarbonat löslich sind und/oder einen mit dem Polycarbonat übereinstimmenden Brechungsindex haben, sind beispielsweise Alkalisalze der Perfluorbutansulfonsäure, Alkalisalze der Diphenylsulfon-3-sulfonsäure bzw. Diphenylsulfon-3,3'-disulfonsäure.

Die erfindungsgemäß verwendbaren Sulfonsäureester der Formel (I) sind entweder literaturbekannt oder nach literaturbekannten Verfahren herstellbar (siehe DE-OS 1 952 387, US-PS 3 346 612 oder Niederprüm, P. Voss, V. Beyl, J. Liebigs. Ann. Chem. 1 (1973) Seiten 20 bis 32).

Erfindungsgemäß geeignete Sulfonsäureester sind insbesondere die der folgenden Formeln (Ia) bis (Im).

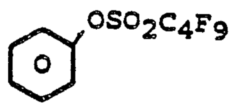 (Ia)

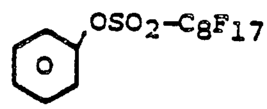 (Ib)

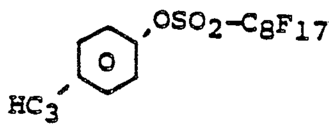 (Ic)

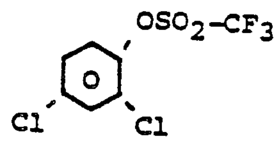 (Id)

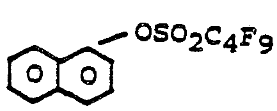 (Ie)

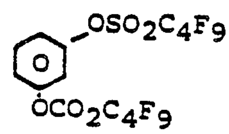 (If)

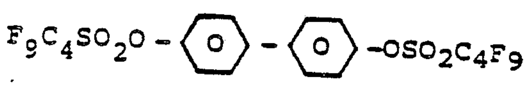 (Ig)

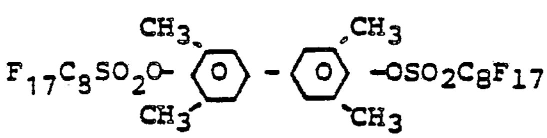 (Ih)

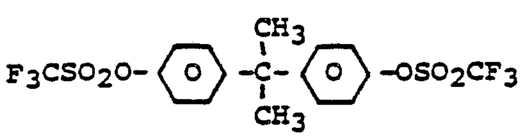 (Ii)

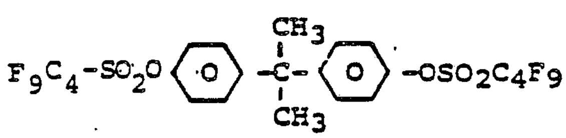 (Ij)

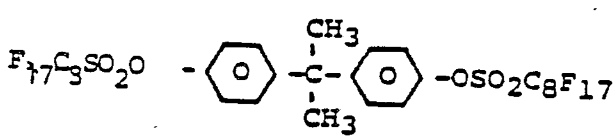 (Ik)

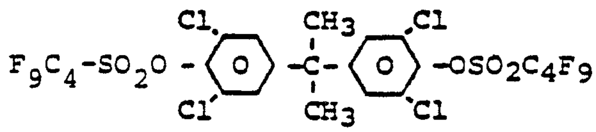

(II)

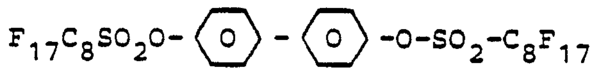

(Im)

Die Herstellung dieser Sulfonsäureester erfolgt beispielsweise durch Umsetzung silylierter Phenole mit Perfluoralkansulfonylfluoriden in Gegenwart von starken Lewisbasen bei Temperaturen von 20-300 °C vorzugsweise 50-150 °C (siehe DOS 1 952 387).

Die Einarbeitung der Flammschutzadditive und der Antitropfmittel kann simultan oder sukzessive in üblichen Mischungsaggregaten bei Temperaturen von 280 °C bis 310 °C, vorzugsweise 290 bis 300 °C stattfinden. Es können sowohl erst die Flammschutzmittel und dann die Antitropfmittel oder zuerst die Antitropfmittel und dann die Flammschutzmittel eingearbeitet werden.

Masterbatch-Verfahren können angewendet werden.

Die erfindungsgemäßen flammwidrigen und gegebenenfalls transparenten Formmassen können noch andere in der Polycarbonatchemie übliche Additive enthalten, wie beispielsweise Pigmente, Farbstoffe, Füllstoffe, Stabilisatoren oder Entformungsmittel.

Die erfindungsgemäßen Formmassen können zu Formkörpern, Filmen etc. in bekannter Weise verarbeitet werden und finden Verwendung beispielsweise im Elektrobereich für Schalterblenden, Steckdosen, Steckerleisten, Schaltkästen usw., im Haushaltssektor für Gehäuseteilen von Bügeleisen, Kaffeemaschinen und im Großgerätebereich z. B. für Computergehäuseteile.

In den nachfolgenden Beispielen wurden die folgenden Sulfonsäureester eingesetzt, die den Komponenten $C_1$-$C_4$ bzw. entsprechen :

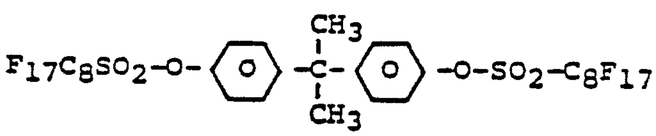

Schmelzbereich: 72-90 °C

(Ik)

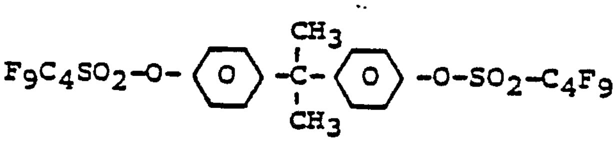

Siedepunkt: 250 °C

(Ij)

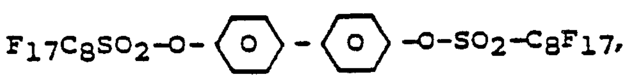

Schmelzbereich: 108-123 °C (Im)

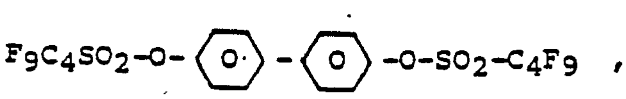

, Schmelzbereich: 70- 71,5 °C (Ig)

Verwendetes Polycarbonat A :

Es wurde ein Produkt, hergestellt aus Bisphenol-A, 0,5 Mol.-% 3,3-Bis(4-hydroxy-3-methyl-phenyl)-2-oxo-2,3-dihydroindol, 3,0 Mol-% Phenol als Kettenabbrecher und Phosgen nach dem Phasengrenzflächenverfahren mit einer Lösungsviskosität von 1,31 (gemessen in $CH_2Cl_2$ bei 25 °C und in einer Konzentration von 0,5 g/100 ml) eingesetzt.

Verwendetes Sulfonsäuresalz B :

n-Perfluorbutansulfonsäure-K-Salz (literaturbekannt)

Beispiele

Der Herstellung der Polycarbonatformmassen erfolgte durch Mischen der Komponenten A und B sowie gegebenenfalls eines Sulfonsäureesters C mittels eines Doppelwellenextruders bei einer Temperatur von 300 °C und einem Durchsatz von 5 kg/h bei einer Drehzahl von 80/min.

Aus dem erhaltenen Granulat wurden über eine Spritzgußmaschine bei 300 °C Probestäbe der Abmessung 127 × 12,7 × 3,2 mm (5,00 × 0,5 × 1/8 inches) geformt. Diese Probekörper wurden 2 Tage bei Raumtemperatur (23 °C gelagert und anschließend auf Abtropfneigung hin untersucht.

Dazu wurden 5 Probekörper mittels 5 aufeinanderfolgender Zündvorgänge von 10 s Dauer entzündet und die Anzahl der Stäbe ermittelt, bei denen brennendes Abtropfen auftrat. Die Versuchsanordnung entsprach den gemäß UL-94 (underwriters ; Laboratories, Inc.) gegebenen Daten für den UL-94 V-Test.

Zusammensetzung

| | | | | | | |
|---|---|---|---|---|---|---|
| A | Gew.-% | 99,9 | 99,4 | 99,4 | 99,4 | 99,4 |
| B | " | 0,1 | 0,1 | 0,1 | 0,1 | 0,1 |
| $C_1$ | " | | 0,5 | | | |
| $C_2$ | " | | | 0,5 | | |
| $C_3$ | " | | | | 0,5 | |
| $C_4$ | " | | | | | 0,5 |

Fortsetzung

| | | | | | |
|---|---|---|---|---|---|
| Anzahl Probekörper (von 5), die während 5 Beflammungen brennendes Abtropfen zeigen | 3 | 0 | 0 | 0 | 0 |
| Aussehen | transparent | transparent | transparent | transparent | transparent |

**Patentansprüche**

1. Verwendung von Perfluoralkansulfonsäurearylestern der Formel (I)

$$(R_FSO_2O)_xAr \quad (I)$$

worin

$R_F$ ein geradkettiger oder verzweigter aliphatischer Perfluorligand mit 1 bis 20 C-Atomen ist, der außer Fluoratomen höchstens ein Wasserstoffatom und/oder auf je zwei C-Atome des Liganden ein sonstiges Halogenatom enthält, und dessen C-Kette von Sauerstoffatomen unterbrochen sein kann,

x eine ganze Zahl von 1 bis 20 und

Ar ein substituierter oder unsubstituierter carbocyclischer oder heterocyclischer, aromatischer Rest ist, der aus einem Ring oder annellierten Ringen oder verbrückten Ringen bestehen kann, als Antitropfmittel in flammwidrigen Formmassen auf Basis thermoplastischer, aromatischer Polycarbonate.

2. Formassen auf Basis von thermoplastischen, aromatischen Polycarbonaten mit einem Gehalt von 0,02 bis 2 Gew.-%, bezogen auf thermoplastisches Polycarbonat, an Flammschutzmitteln und mit einem Gehalt an Antitropfmitteln, dadurch gekennzeichnet, daß sie als Antitropfmittel Perfluoralkansulfonsäurearylester der Formel (I) gemäß Anspruch 1 in Mengen von 0,2 Gew.-% bis 2 Gew.-% bezogen auf thermoplastisches Polycarbonat, enthalten.

3. Verfahren zur Herstellung von Formmassen auf Basis von thermoplastischen, aromatischen Polycarbonaten mit einem Gehalt an Flammschutzmitteln und mit einem Gehalt an Antitropfmitteln, dadurch gekennzeichnet, daß man das Flammschutzmittel in Mengen von 0,02 bis 2 Gew.-%, bezogen auf thermoplastisches Polycarbonat, zugleich oder sukzessive mit dem Antitropfmittel der Formel (I) gemäß Anspruch 1 in Mengen von 0,2 Gew.-% bis 2 Gew.-%, bezogen auf thermoplastisches Polycarbonat, in das thermoplastische Polycarbonat bei einer Temperatur von 280 °C bis 310 °C über einen Doppelwellenextruder mit einer Drehzahl von 80 bis 100 Umdrehungen pro Minute und einem Durchsatz von 5 kg/h einarbeitet.

## Claims

1. Use of perfluoroalkanesulphonic acid aryl esters of the formula (I)

$$(R_FSO_2O)_xAr \quad (I)$$

wherein

$R_F$ is a straight-chain or branched aliphatic perfluoro ligand with 1 to 20 C atoms, which, in addition to fluorine atoms, contains at most one hydrogen atom and/or one other halogen atom per two C atoms of the ligand, and the C chain of which can be interrupted by oxygen atoms,

x is an integer from 1 to 20 and

Ar is a substituted or unsubstituted carbocyclic or heterocyclic, aromatic radical which can consist of a ring or fused rings or bridged rings, as anti-drip agents in flame-resistant moulding compositions based on thermoplastic, aromatic polycarbonates.

2. Moulding compositions based on thermoplastic, aromatic polycarbonates with a content of 0.02 to 2 % by weight, based on thermoplastic polycarbonate, of flameproofing agents and with a content of anti-drip agents, characterised in that they contain as anti-drip agents perfluoroalkanesulphonic acid aryl esters of the formula (I) according to Claim 1 in quantities of 0.2 % by weight to 2 % by weight, based on thermoplastic polycarbonate.

3. Process for the production of moulding compositions based on thermoplastic, aromatic polycarbonates with a content of flame-proofing agents and with a content of anti-drip agents, characterised in that the flameproofing agent, in quantities of 0.02 to 2 % by weight, based on thermoplastic polycarbonate, is incorporated at the same time or successively with the anti-drip agent of the formula (I) according to Claim 1, in quantities of 0.2 % by weight to 2 % by weight, based on thermoplastic polycarbonate, into the thermoplastic polycarbonate at a temperature of 280 °C to 310 °C, via a twinscrew extruder with a speed of rotation of 80 to 100 revolutions per minute and a throughput of 5 kg/h.

## Revendications

1. Utilisation d'esters aryliques d'acides perfluoralcanesulfoniques de formule (I)

$$(R_FSO_2O)_xAr \quad (I)$$

dans laquelle

$R_F$ est un ligand perfluoré aliphatique à chaîne droite ou ramifiée ayant 1 à 20 atomes de carbone, qui contient, en plus des atomes de fluor, au maximum un atome d'hydrogène et/ou, pour deux atomes de carbone du ligand, un autre atome d'halogène, et dont la chaîne carbonée peut être interrompue par des atomes d'oxygène,

x est un nombre entier de 1 et 20 et

Ar est un reste aromatique carbocyclique ou hétérocyclique substitué ou non substitué, qui peut être constitué d'un noyau ou de noyaux condensés ou pontés, comme agents anti-gouttes dans des mélanges à mouler résistant à la flamme, à base de polycarbonates aromatiques thermoplastiques.

2. Mélanges à mouler à base de polycarbonates aromatiques thermoplastiques ayant une teneur de 0,02 à 2 % en poids, par rapport au polycarbonate thermoplastique, en agents résistant à la flamme, et une teneur en agents anti-gouttes, caractérisés en ce qu'ils contiennent comme agents anti-gouttes des esters aryliques d'acides perfluoralcanesulfoniques de formule (I) suivant la revendication 1 en quantités de 0,2 à 2 % en poids par rapport au polycarbonate thermoplastique.

3. Procédé de production de mélanges à mouler à base de polycarbonates aromatiques thermoplastiques ayant une teneur en agents résistant à la flamme et une teneur en agents anti-gouttes, caractérisé en ce qu'on incorpore l'agent résistant à la flamme en quantités de 0,02 à 2 % en poids, par rapport au polycarbonate thermoplastique, et l'agent anti-gouttes de formule (1) suivant la revendication 1 en quantités de 0,2 à 2 % en poids, en même temps ou l'un après l'autre, dans le polycarbonate thermoplastique à une température de 280 à 310 °C au moyen d'une extrudeuse à double vis à une vitesse de rotation de 80 à 100 tr/min et à un débit de 5 kg/h.